(19) 

Europäisches
Patentamt
European
Patent Office
Office européen
des brevets

(11)  **EP 4 177 056 A1**

(12)  **EUROPEAN PATENT APPLICATION**
published in accordance with Art. 153(4) EPC

(43) Date of publication:
**10.05.2023  Bulletin 2023/19**

(21) Application number: **21837332.2**

(22) Date of filing: **06.07.2021**

(51) International Patent Classification (IPC):
*B33Y 10/00* (2015.01)       *B33Y 80/00* (2015.01)
*B29C 64/153* (2017.01)      *B29C 64/165* (2017.01)
*B33Y 70/10* (2020.01)

(52) Cooperative Patent Classification (CPC):
**B29C 64/153; B29C 64/165; B33Y 10/00;
B33Y 70/10; B33Y 80/00**

(86) International application number:
**PCT/JP2021/025513**

(87) International publication number:
**WO 2022/009899 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.07.2020  JP 2020116528**

(71) Applicants:
• **Mitsubishi Chemical Corporation
Chiyoda-ku
Tokyo 100-8251 (JP)**
• **Mitsubishi Engineering-Plastics Corporation
Tokyo 105-0021 (JP)**

(72) Inventors:
• **SUGIHARA, Masaki
Tokyo 100-8251 (JP)**
• **KISHISHITA, Minoru
Tokyo 100-8251 (JP)**
• **SHOJI, Hidekazu
Hiratsuka-shi, Kanagawa 254-0016 (JP)**
• **YAMASUE, Nao
Tokyo 100-8251 (JP)**

(74) Representative: **Hoffmann Eitle
Patent- und Rechtsanwälte PartmbB
Arabellastraße 30
81925 München (DE)**

(54)  **POWDER FOR POWDER LAMINATE MOLDING METHOD, POWDER LAMINATE MOLDING METHOD, AND MOLDED ARTICLE**

(57)     Provided is a powder for selective laser sintering including: polybutylene terephthalate, wherein the powder satisfies the following formula (1), is excellent in application properties and fabricability, and allows a manufactured article excellent in an external appearance, strength, etc. to be obtained:

$$(1): |\text{voltage after a drum rotates - initial voltage}| \leq 100 \qquad (1):$$

where the initial voltage and the voltage after a drum rotates of the powder are values measured in an electrification characteristics test with a rotating drum type powder flow analyzer, in the electrification characteristics test, 50 to 150 g of the powder is weighed out to measure the values under conditions for the rotating drum of 1 rpm for 2 minutes, wherein a unit of the voltages is V.

EP 4 177 056 A1

## Description

[Technical field]

The present invention relates to a powder for selective laser sintering; the powder contains polybutylene terephthalate (hereinafter polybutylene terephthalate may be referred to as PBT). In particular, the present invention relates to a powder for selective laser sintering; the powder is excellent in formability of powder layers when a 3D article is manufactured with a selective laser sintering machine. The present invention also relates to selective laser sintering and a manufactured article which are by the use of this powder for selective laser sintering.

[Background Art]

Selective laser sintering, which is one kind of additive manufacturing, is a method for obtaining a 3D manufactured article by: fabricating a thin layer of a powdered material including a resin through heating to a temperature near the melting point of the resin powder by means of a heating means and sintering; and repeating the foregoing to form a layered body.

For forming the thin layer of the powdered material, the powdered material is distributed over a build platform (also referred to as a build stage), and the distributed material is leveled off by means of a recoater (a blade or a roller) (hereinafter this operation may be referred to as "applying" or "filling") to form a powder layer of a uniform thickness.

As the heating means, any of a laser, and an infrared lamp, a xenon lamp, a halogen lamp, and the like is used.

Layers are fabricated by: irradiating an area of the powder layer to be fabricated with a heating medium such as a laser to melt and sinter the powder; thereafter, repeating the same operation. The following technique may be also used; for improving the absorption efficiency of the heating medium, a predetermined medium is applied to a portion of the powder layer to be fabricated after the powder is applied to form the powder layer.

Selective laser sintering is a notable technique in recent years because it is not necessary to use a mold, any kind of resin powders can be used as a raw material as long as the powder has heat resistance to some extent, and the reliability of a manufactured article to be obtained is high.

It has been conventionally considered to use polybutylene terephthalate (PBT) as a powdered material for selective laser sintering. For example, patent literature 1 discloses a polybutylene terephthalate resin having a crystallization temperature lower than a homopolybutylene terephthalate resin as a resin powder material for selective laser sintering; this polybutylene terephthalate resin is a copolymerized PBT resin formed by copolymerizing a copolymerizable monomer having terephthalic acid or an ester-forming derivative thereof, 1,4-butanediol or an ester-forming derivative thereof, and other dicarboxylic acid copolymerizable therewith (or an ester-forming derivative thereof) or other diol (or an ester-forming derivative thereof; the proportion of the copolymerizable monomer is 3 to 30 mol%, and the melting point thereof is 200 to 215°C.

[Citation List]

[Patent Literature]

Patent Literature 1: WO 2016/121013 A1

[Summary of Invention]

[Technical Problem]

However, the inventors of the present invention made an examination, and found that a conventional powder for selective laser sintering with PBT as disclosed in patent literature 1 may lead to a nonuniform external appearance of an obtained manufactured article, or may make it impossible to obtain the strength to be aimed. The inventors sought a reason for them, and found that the following problem;

In selective laser sintering, a powder is layered over a substrate or the like on a build platform, and thereafter, is layered while heated. However, when the powder is layered over the substrate or the like, static electricity is generated between the powder and a tool for the layering, for example, a recoater, which results in poor application properties. This causes an external appearance of a finally obtained manufactured article to be nonuniform, and further the strength thereof to be impaired.

An object of the present invention is to solve such a problem, and to provide: a powder for selective laser sintering; the powder is excellent in application properties and fabricability, and allows a manufactured article excellent in an external appearance, strength, etc. to be obtained; and selective laser sintering and a manufactured article which are by the use of this powder for selective laser sintering.

[Solution to Problem]

As a result of their intensive studies to solve the above problem, the inventors of the present invention focused on the state of electrification of powders, and found that control of this leads to obtainment of a powder that makes it easy to manufacture a solid structure, and that offers a final manufactured article excellent in its external appearance, strength, etc. Then, the inventors completed the present invention.
That is, the gist of the present invention is as follows.

[1] A powder for selective laser sintering, the powder comprising:

polybutylene terephthalate, wherein
the powder satisfies the following formula (1):

$$(1): |\text{voltage after a drum rotates - initial voltage}| \leq 100$$

where the initial voltage and the voltage after a drum rotates of the powder are values measured in an electrification characteristics test with a rotating drum type powder flow analyzer, in the electrification characteristics test, 50 to 150 g of the powder is weighed out to measure the values under conditions for the rotating drum of 1 rpm for 2 minutes, wherein
a unit of the voltages is V.

[2] The powder according to [1], wherein
the polybutylene terephthalate has a melting point of 170°C to 215°C.
[3] The powder according to [1] or [2], the polybutylene terephthalate comprising:

a constitutional unit derived from a terephthalic acid component;
a constitutional unit derived from 1,4-butanediol; and
another constitutional unit.

[4] A powder for selective laser sintering, the powder comprising:

a thermoplastic resin having a melting point of 170°C to 215°C, wherein
the powder satisfies the following formula (1):

$$(1): |\text{voltage after a drum rotates - initial voltage}| \leq 100$$

where the initial voltage and the voltage after a drum rotates of the powder are values measured in an electrification characteristics test with a rotating drum type powder flow analyzer, in the electrification characteristics test, 50 to 150 g of the powder is weighed out to measure the values under conditions for the rotating drum of 1 rpm for 2 minutes, wherein
a unit of the voltages is V.

[5] The powder according to any of [1] to [4], the powder further comprising:
at least one selected from the group consisting of a copolymer having a polyether structure, and a surfactant. In short, the powder for selective laser sintering according to the present invention may contain either one of the copolymer having a polyether structure or the surfactant, and may contain both of them.
[6] The powder according to [5], wherein
a content of said at least one selected from the group consisting of a copolymer having a polyether structure, and a surfactant is 0.1 mass% to 20 mass%.
[7] The powder according to any of [1] to [6], the powder further comprising:
an inorganic fine particle.
[8] The powder according to [7], the powder comprising
at least two inorganic fine particles having different compositions as the inorganic fine particle.
[9] The powder according to [7] or [8], wherein

a content of the inorganic fine particle is 0.05 mass% to 5.0 mass%.
[10] The powder according to any of [7] to [9], wherein
the inorganic fine particle has a mean particle diameter of 1 nm to 50 nm.
[11] The powder according to any of [1] to [10], wherein
D50 as particle size distribution is 20 $\mu$m to 80 $\mu$m.
[12] Selective laser sintering with the powder according to any of claims [1] to [11].
[13] A manufactured article with the powder according to any of [1] to [11].

[Advantageous Effects of Invention]

A powder for selective laser sintering according to the present invention makes it easy to manufacture a solid structure, and offers a final manufactured article excellent in its external appearance, strength, etc.

Accordingly, the use of a powder for selective laser sintering according to the present invention allows a manufactured article excellent in its external appearance, strength, etc. to be efficiently produced by selective laser sintering with high yields.

[Description of Embodiments]

Hereinafter the best mode for carrying out the present invention will be described in detail. The undermentioned description of constituent features pertains to a representative of embodiments according to the present invention, and does not limit the present invention. In this specification, two numerical values and "to" therebetween mean a numerical range including these former and latter numerical values as the lower and upper limits, respectively.

[Powder for Selective Laser Sintering]

A powder for selective laser sintering according to the present invention (hereinafter may be referred to as "the powder of the present invention") contains a predetermined thermoplastic resin, and satisfies the following formula (1):

$$(1): \left| \text{voltage after a drum rotates - initial voltage} \right| \leq 100$$

where the initial voltage and the voltage after a drum rotates of the powder are values measured in an electrification characteristics test with a rotating drum type powder flow analyzer, in the electrification characteristics test, 50 to 150 g of the powder is weighed out to measure the values under the conditions for the rotating drum of 1 rpm for 2 minutes. Here, the unit of the voltages is V.

Before the electrification characteristics test, preferably, static electricity is eliminated from the powder by means of an ionizer for 1 to 5 minutes.

The "predetermined thermoplastic resin" means a thermoplastic resin having a melting point of 170°C to 250°C, or polybutylene terephthalate.

Hereinafter any polybutylene terephthalate that is used as a resin material of the powder for selective laser sintering according to the present invention will be referred to as "the PBT of the present invention", and any preferred copolymerized PBT among the polybutylene terephthalates may be referred to as "the copolymerized PBT of the present invention".

A resin composition that contains: the PBT of the present invention, preferably the copolymerized PBT of the present invention; and the undermentioned surfactants and other components incorporated if necessary, and that is used as a raw material for producing the powder for selective laser sintering according to the present invention may be referred to as "the resin composition of the present invention".

<Reasons why Present Invention Provides Effect>

The reason why the powder for selective laser sintering according to the present invention provides the effects of the present invention is not yet clear, but is presumed as follows.

The powder for selective laser sintering according to the present invention is a powder containing a predetermined thermoplastic resin (polybutylene terephthalate, or a thermoplastic resin having a melting point of 170°C to 215°C); thereby, can have heat resistance and chemical resistance equal to a conventional powder (polyamide) and can offer a manufactured article having strength equal to that a conventional powder offers, and has low water absorbency and shows a small change in physical properties after fabricated.

In addition, the present invention focuses on generation of static electricity after the powder flows. The satisfaction of the formula (1) leads to suppressed static electricity in fabrication, improved dispersibility of the powder during the distribution of the powder, and suppressed failure in the distribution and the like due to the adhesion of the powder to a recoater; thereby, which can lead to obtainment of a manufactured article excellent in its external appearance and strength.

For satisfying the formula (1), preferably, the powder of the present invention further contains at least one selected from the group consisting of the undermentioned surfactant and copolymer having a polyether structure, and/or inorganic fine particle, together with the PBT of the present invention, preferably the copolymerized PBT of the present invention.

<Composition of PBT>

The PBT of the present invention has a constitutional unit derived from a terephthalic acid component, and a constitutional unit derived from 1,4-butanediol. The PBT of the present invention may be a PBT homopolymer consisting of the constitutional unit derived from a terephthalic acid component, and the constitutional unit derived from 1,4-butanediol; or may be a copolymerized PBT having the constitutional unit derived from a terephthalic acid component, the constitutional unit derived from 1,4-butanediol, and any constitutional unit other than the foregoing; but is preferably a copolymerized PBT.

It is noted that the PBT homopolymer in this specification further has any constitutional unit equivalent to impurities that is other than the constitutional unit derived from a terephthalic acid component and the constitutional unit derived from 1,4-butanediol.

As the copolymerized PBT, a PBT copolymer having at least 95 mol% of the constitutional unit derived from a terephthalic acid component, the constitutional unit derived from 1,4-butanediol, and a constitutional unit derived from any other dicarboxylic acid component in total is preferable.

Preferably, the major components of the PBT of the present invention are the constitutional unit derived from a terephthalic acid component and the constitutional unit derived from 1,4-butanediol. Specifically, more than 50 mol% of the total constitutional units of the PBT is preferably the aforementioned two constitutional units. This proportion is more preferably at least 75 mol%, further preferably at least 80 mol%, and still further preferably at least 85 mol%, and may be at least 88 mol%. The upper limit of this proportion is not particularly limited, but may be 100 mol%. That is, the PBT of the present invention may be a PBT homopolymer consisting of the aforementioned two constitutional units.

Examples of any copolymer other than a terephthalic acid component in the PBT of the present invention include: isophthalic acid, naphthalenedicarboxylic acid, and succinic acid (or any derivative thereof) as a dicarboxylic acid component. Examples of any copolymer of a diol component other than 1,4-butanediol in the PBT of the present invention include ethylene glycol, diethylene glycol, 1,3-propanediol, 1,4-cyclohexanedimethanol, 2,4-diethyl-1,5-pentanediol, butyl ethyl propanediol, spiroglycol, tricyclodecanedimethanol, and 9,9-bis[4-(2-hydroxyethoxy)phenyl]fluorene. It is noted that the other copolymers herein are not limited to them.

Among these examples of the other copolymers, isophthalic acid is particularly preferably used because industrially available easily and allowing a polymer to be easily produced. Among these examples of the copolymers, plural copolymers can be simultaneously used.

When the copolymerized PBT further contains a dicarboxylic acid component other than terephthalic acid as a copolymer, the proportion of the content of the terephthalic acid component on the basis of 100 mol% of the total dicarboxylic acid component is preferably at least 65 mol%, more preferably at least 70 mol%, and further preferably at least 75 mol%. The upper limit of the terephthalic acid component is preferably at most 95 mol%, more preferably at most 93 mol%, and further preferably at most 91 mol%. When the copolymerized PBT contains a dicarboxylic acid component other than terephthalic acid as a copolymer, the proportion of the content of the dicarboxylic acid component other than terephthalic acid (e.g., isophthalic acid) on the basis of 100 mol% of the total dicarboxylic acid component is preferably at least 5 mol%, more preferably at least 7 mol%, and further preferably at least 9 mol%. The upper limit of the dicarboxylic acid component other than terephthalic acid (e.g., isophthalic acid) is preferably at most 35 mol%, more preferably at most 30 mol%, and further preferably at most 25 mol%. Such proportions lead to a tendency to improve heat resistance, and further, to easily exert appropriate crystallinity in fabrication.

In the present invention, in particular, when the copolymerized PBT is used, a terephthalic acid component and an isophthalic acid component constitute at least 98 mol%, more preferably at least 99 mol%, and further preferably 100 mol% of the total dicarboxylic acid component.

<Physical Properties of PBT>

(Intrinsic Viscosity)

The intrinsic viscosity of the PBT of the present invention is preferably at least 0.80 dL/g, and may be at least 0.9 dL/g. The upper limit of this intrinsic viscosity is normally at most 1.50 dL/g, and may be at most 1.0 dL/g.

The intrinsic viscosity of the PBT is obtained by the following method.

Approximately 0.25 g of a PBT specimen is dissolved in approximately 25 mL of a phenol and 1,1,2,2-tetrachloroethane solvent mixture (weight ratio: 1/1) in such a manner that the concentration thereof is 1.00 g/dL; thereafter, the resultant specimen solution is cooled to 30°C, and the falling speed on the specimen solution, and the number of seconds for falling on the solvent alone are each measured with a full automatic solution viscometer at 30°C to calculate the intrinsic viscosity according to the following formula (2):

$$(2): \text{intrinsic viscosity} = ((1+4KH \cdot \eta sp)0.5-1)/(2KH \cdot C)$$

where $\eta sp = \eta/\eta0-1$, $\eta$ is the number of seconds for falling on the specimen solution, $\eta0$ is the number of seconds for falling on the solvent alone, C is the concentration of the specimen solution (g/dL), and KH is the Huggins coefficient. Here, KH is 0.33. The specimen is dissolved at 110°C for 30 minutes.

"SS600L-2" manufactured by Shibayama Scientific Co., Ltd. can be used as the full automatic solution viscometer.

When the PBT of the present invention contains two or more PBTs, the intrinsic viscosity of the PBT of the present invention shall be the intrinsic viscosity of the mixture of the two or more PBTs.

(Terminal Carboxyl Group Content)

The terminal carboxyl group content of the PBT of the present invention is preferably 1 to 100 equivalent(s) per ton (eq/ton), and more preferably 1 to 90 eq/ton.

The terminal carboxyl group content of the PBT is obtained by the following method.

A PBT specimen is pulverized; thereafter, the pulverized PBT specimen is dried with a hot air dryer at 120°C for 15 minutes, the resultant specimen is cooled to room temperature in a desiccator, and exactly 0.1 g of the resultant specimen is weighed out to be collected in a test tube. In this test tube, the specimen is dissolved in 3 mL of benzyl alcohol added thereto at 195°C for 3 minutes under a dry nitrogen gas blow, followed by gradually adding 5 mL of chloroform thereto to be cooled to room temperature. To this solution, 1 to 2 drop(s) of a phenol red indicator is added, the resultant solution is subjected to titration with a 0.1 N benzyl alcohol solution of sodium hydroxide under a dry nitrogen gas blow and while stirring, and the titration is ended at the time point when the solution turns red from yellow. As blank determination, the same operation is performed without dissolution of any polyester specimen to calculate the terminal carboxyl group content according to the following formula (3):

$$(3): \text{terminal carboxyl group content (eq/ton)} = (a-b) \times 0.1 \times f/w$$

where a is the amount ($\mu$L) of the 0.1 N benzyl alcohol solution of sodium hydroxide required for the titration, b is the amount ($\mu$L) of the 0.1 N benzyl alcohol solution of sodium hydroxide required for the titration in the blank determination, w is the amount (g) of the polyester specimen, and f is the titer of the 0.1 N benzyl alcohol solution of sodium hydroxide.

The titer (f) of the 0.1 N benzyl alcohol solution of sodium hydroxide is obtained by the following method.

To a test tube, 5 mL of methanol is collected, 1 to 2 drop(s) of an ethanol solution of phenol red is added thereto as an indicator, the resultant is subjected to titration with 0.4 mL of a 0.1 N benzyl alcohol solution of sodium hydroxide to the point of color change; then, 0.2 mL of a 0.1 N aqueous solution of hydrochloric acid having a known titer is collected, and added to the resultant as a standard solution, the resultant is subjected to titration again with a 0.1 N benzyl alcohol solution of sodium hydroxide to the point of color change (the foregoing operations are carried out under a dry nitrogen gas blow) to calculate the titer (f) according to the following formula (4):

$$(4): \text{titer (f)} = \text{titer of the 0.1 N aqueous solution of hydrochloric acid} \times \text{the collected amount}$$

($\mu$L) of the 0.1 N aqueous solution of hydrochloric acid/the amount of the 0.1 N benzyl alcohol solution of sodium hydroxide for the titration ($\mu$L)

When the PBT of the present invention contains two or more PBTs, the terminal carboxyl group content of the PBT of the present invention shall be the terminal carboxyl group content of the mixture of the two or more PBTs.

(Melting Point)

The lower limit of the melting point of the PBT of the present invention is not particularly limited, but is preferably at least 170°C, more preferably at least 175°C, further preferably at least 180°C, particularly preferably at least 185°C, and most preferably at least 190°C in view of heat resistance of a manufactured article to be obtained. The upper limit of the melting point of the PBT of the present invention is not particularly limited, but is preferably at most 215°C, more preferably at most 210°C, further preferably at most 205°C, particularly preferably at most 199°C, and most preferably at most 195°C in view of the energy requirement for melting the material in fabrication.

The melting point of the PBT is measured by, for example, the method described in the section of examples below.

In the examples described later, such physical properties of PBT powders containing additives such as a phenolic stabilizer were measured. Whether a small amount of an additive such as a stabilizer is contained or not does not affect any measured value.

(Glass Transition Temperature)

The glass transition temperature of the PBT of the present invention is preferably 30°C to 60°C. This glass transition temperature at 30°C or higher makes a manufactured article to be obtained difficult to soften, which can make it difficult for the manufactured article to have a fault. The glass transition temperature of the PBT used in the present invention is preferably at least 32°C, and further preferably at least 34°C. This glass transition temperature at 60°C or lower makes it possible to more effectively suppress melting non-uniformity of the manufactured article. When the PBT is the copolymerized PBT, the deterioration of the crystallinity of the manufactured article can be effectively suppressed, depending on a copolymer in the PBT, to lead to a tendency to improve the heat resistance. The upper limit of the glass transition temperature of the PBT of the present invention is more preferably at most 55°C, further preferably at most 50°C, even further preferably at most 48°C, and still further preferably at most 46°C.

The glass transition temperature of the PBT is measured by the following method.

A PBT specimen is subjected to injection molding at 250°C in resin temperature at 60°C in mold temperature to obtain a test specimen of 5 mm in width, 50 mm in length, and 1 mm in thickness. The obtained test specimen is measured with a solid viscoelasticity measuring instrument RSA-III (from TA Instruments) under the conditions of: Dynamic TempSweep in measurement mode; 1 Hz in frequency; 0 to 120°C (3°C/min) in temperature; and 0.05% in displacement, and the obtained peak of tan$\delta$ is defined as a glass transition temperature.

<PBT Content>

The PBT content in the powder of the present invention is not particularly limited. This PBT preferably constitutes a major component (more than 50 mass%) of the resin components contained in the powder of the present invention, more preferably constitutes at least 80 mass%, further preferably constitutes at least 90 mass%, still further preferably constitutes at least 95 mass%, and even further preferably constitutes at least 99 mass% of the resin components.

The resin components preferably constitute at least 50 mass%, more preferably constitute at least 55 mass%, and further preferably constitute at least 60 mass% of the powder of the present invention.

From the foregoing, the PBT content in the powder of the present invention is preferably at least 50 parts by mass, more preferably at least 60 parts by mass, further preferably at least 70 parts by mass, particularly preferably at least 80 parts by mass, and most preferably at least 90 parts by mass on the basis of 100 parts by mass of the powder. The upper limit of this content is normally 100 parts by mass. Any other components are contained as appropriate.

<Method of Producing PBT>

A known method can be used as the method of producing the PBT of the present invention without any particularly restrictions. For example, the following method of obtaining a polymer can be used: first, a low polymer is obtained by transesterification and/or an esterification reaction of a terephthalic acid component and 1,4-butanediol with a copolymer added if necessary, followed by a melt polycondensation reaction of the obtained low polymer. These reactions may be batch or continuous reactions.

As the terephthalic acid component herein, terephthalic acid, and one or at least two terephthalic acid derivatives such as alkyl esters (the carbon number of the alkyl group is 1 to 3, and more preferably 1), and halides of terephthalic acid can be used. As the isophthalic acid component herein as the copolymer, isophthalic acid, and one or at least two isophthalic acid derivatives such as alkyl esters (the carbon number of the alkyl group is 1 to 3, and more preferably 1), and halides of isophthalic acid can be also used. The same is also applied to any other dicarboxylic acid components.

For example, the low polymer herein is obtained by transesterification and/or an esterification reaction at atmospheric pressure or under pressure with or without a catalyst by means of a single- or multi-stage reactor.

An example of the way of the melt polycondensation herein is a way of distilling generated water and alcohol out of the system while heating at reduced pressure in the presence of a catalyst by means of a single- or multi-stage reactor. Examples of the polycondensation catalyst used herein include compounds of antimony, germanium, titanium, aluminum, and the like.

In addition to the aforementioned catalysts, the following additives may be used: reaction aids and antioxidants such as phosphorus compounds including orthophosphoric acid, phosphorous acid, hypophosphorous acid, polyphosphoric acid, and esters and metal salts thereof; alkali metal compounds including sodium compounds like sodium hydroxide and sodium benzoate, lithium compounds like lithium acetate, and potassium compounds like potassium hydroxide and potassium acetate; and alkaline earth metal compounds including magnesium acetate and calcium acetate.

To accelerate the reaction rate, for example, the following conditions preferably apply: the vacuum is made to be higher; the rate of temperature rise is accelerated; and the renewal rate of the top of the reaction liquor is accelerated.

The PBT obtained by the melt polycondensation is drawn out in the form of a strand or a sheet via an extraction port generally provided at the bottom of a melt polycondensation tank, and thereafter, the drawn PBT is cut with a cutter while or after water cooling to be a granular material in the form of a pellet, a chip, or the like (having a length of, e.g., approximately 3 to 10 mm).

(Polycondensation Catalyst)

For producing the PBT of the present invention, particularly, a titanium compound such as tetrabutyl titanate is desirably used as the polycondensation catalyst herein. The use of a titanium compound allows a PBT generally displaying a high catalytic activity, generating a small amount of foreign matters caused by the catalyst, and particularly suitable for selective laser sintering to be produced.

Separate addition of a titanic compound as the catalyst in the step of producing the low polymer and the polycondensation step enables the PBT to be particularly effectively produced.

Preferably, the amount of a titanium compound added herein is 10 to 40 mass ppm in the step of producing the low polymer, and 30 to 70 mass ppm in the polycondensation step, that is, 40 to 110 mass ppm in total in terms of a titanium element on the basis of the PBT to be generated. The total amount of 40 mass ppm or more allows the polycondensation rate to be kept high. The total amount of 110 mass ppm or less can lead to a suppressed increase of the yellowness in heating. The smaller the amount of a titanium compound added herein is, the less the yellowness in heating is.

(Contrivance for Obtaining Preferred PBT)

The method of producing the PBT of the present invention having the aforementioned physical properties such as the melting point, antistatic properties as a powder for selective laser sintering, etc. within the undermentioned preferred ranges varies according to processes and machines used, and thus, cannot be determined uniformly. Examples of this method include: a method of further adding at least one selected from the copolymer having a polyether structure, and surfactants after the melt polycondensation to compound the PBT; and a method of adjusting the electric charge of an inorganic fine particle that is a flow aid added to the pulverized PBT powder.

In addition to the foregoing, the following may be employed: a solid phase polymerization method of further heating the resultant in a solid state to adjust the crystallinity while increasing the molecular weight; a method of heating the powder after the polymerization for a certain time; and a method of adding a crystal nucleating agent.

The use of any of these preferred methods leads to suppression of static electricity when the powder is applied onto a build platform by means of a recoater in fabrication with the powder, and thereby, the amount of the powder adhering to the surface of the recoater is decreased, which can improve the distributability. Thus, any of these preferred methods is preferable for the method of producing the powder for selective laser sintering.

<Copolymer Having Polyether Structure>

The powder of the present invention preferably contains a copolymer having a polyether structure.

As described in the undermentioned method of producing the resin composition of the present invention, the copolymer having a polyether structure can be contained in the resin composition of the present invention by melting and kneading this copolymer with the PBT of the present invention. The copolymer having a polyether structure may be added to the PBT powder after the PBT of the present invention is pulverized.

Preferred examples of the copolymer having a polyether structure used in the present invention include polyether block-polyolefin-based copolymers, polyoxyalkylene-based copolymers, polyether ester amide-based copolymers, and ethylene oxide-propylene oxide-allyl glycidyl-based copolymers because being able to exhibit excellent antistatic properties in the presence of the PBT of the present invention.

Further, because of an excellent external appearance of the surface of a manufactured article to be obtained, a polyether ester amide block copolymer formed by repeatedly and alternately bonding a polyamide block and a polyether block via an ester bond is preferable.

The powder of the present invention may contain one copolymer alone, or two or more copolymers among the foregoing examples of the copolymer having a polyether structure.

When the powder of the present invention contains the copolymer having a polyether structure, the content of this copolymer (the total content of the copolymers when two or more copolymers having a polyether structure are contained; and the total content of the copolymer and the surfactant when the undermentioned surfactant is further contained) in the powder is not particularly limited. The lower limit of this content is preferably at least 0.1 mass%, more preferably at least 0.4 mass%, further preferably at least 0.7 mass%, and most preferably at least 1.0 mass%. The upper limit of this content is preferably at most 20 mass%, more preferably at most 17 mass%, further preferably at most 14 mass%, and particularly preferably at most 11 mass%. The content within the above range leads to good distributability and antistatic properties of the powder.

<Surfactant>

The powder of the present invention preferably contains a surfactant.

As described in the undermentioned method of producing the resin composition of the present invention, a surfactant can be contained in the resin composition of the present invention by melting and kneading with the PBT of the present invention. Such a surfactant may be added to the PBT powder after the PBT of the present invention is pulverized.

Examples of the surfactant used in the present invention include anionic surfactants, nonionic surfactants, cationic surfactants, and amphoteric surfactants. Among them, in view of compatibility with various resins, anionic surfactants and nonionic surfactants are preferrable, and anionic surfactants are particularly preferrable.

Examples of anionic surfactants herein include: sulfonic acid type anionic surfactants such as alkyl sulfonates, alkyl aryl sulfonates, and ester sulfonates; phosphoric acid type anionic surfactants such as alkyl phosphate esters or salts thereof, and polyoxyalkylene alkyl ether phosphate esters or salts thereof; sulfate ester type anionic surfactants such as alkyl sulfate ester salts, and alkyl ether sulfate ester salts; and carboxylate type anionic surfactants such as alkyl fatty acid salts. Among them, sulfonic acid type surfactants are preferrable in view of excellent antistatic properties.

Examples of sulfonic acid type anionic surfactants herein include: alkyl sulfonates such as decyl sulfonate, dodecyl sulfonate, tetradecyl sulfonate, hexadecyl sulfonate, and octadecyl sulfonate; alkyl aryl sulfonates such as butylbenzene sulfonate, hexylbenzene sulfonate, octylbenzene sulfonate, decylbenzene sulfonate, dodecylbenzene sulphonate, tetradecylbenzene sulfonate, hexadecylbenzene sulfonate, octadecylbenzene sulfonate, dibutyl naphthalene sulfonate, and triisopropyl naphthalene sulfonate; and ester sulfonates such as dibutyl sulfosuccinate, dioctyl sulfosuccinate, dodecyl sulfoacetate, and nonylphenoxy polyethylene glycol sulfoacetate.

Among them, a sulfonic acid type anionic surfactant herein has C8 or more, preferably C10-22, and further preferably C12-18 alkyl in view of excellent antistatic properties. As a salt, a metal salt is preferable, a salt of an alkali metal such as lithium, sodium, and potassium is particularly preferable, and a sodium salt is more preferable. An alkyl sulfonate is preferable in view of antistatic properties.

Examples of phosphoric acid type anionic surfactants herein include: alkyl phosphate esters or salts thereof, such as butyl phosphate ester, butyl phosphate, hexyl phosphate ester, hexyl phosphate, octyl phosphate ester, octyl phosphate, decyl phosphate ester, decyl phosphate, lauryl phosphate ester, lauryl phosphate, tetradecyl phosphate ester, tetradecyl phosphate, hexadecyl phosphate ester, hexadecyl phosphate, stearyl phosphate ester, and stearyl phosphate; and polyoxyalkylene alkyl ether phosphate esters or salts thereof, such as polyoxyethylene butyl ether phosphate ester, polyoxyethylene butyl ether phosphate, polyoxyethylene hexyl ether phosphate ester, polyoxyethylene hexyl ether phosphate, polyoxyethylene octyl ether phosphate ester, polyoxyethylene octyl ether phosphate, polyoxyethylene decyl ether phosphate ester, polyoxyethylene decyl ether phosphate, polyoxyethylene lauryl ether phosphate ester, polyoxyethylene lauryl ether phosphate, polyoxyethylene tetradecyl ether phosphate ester, polyoxyethylene tetradecyl ether phosphate, polyoxyethylene hexadecyl ether phosphate ester, polyoxyethylene hexadecyl ether phosphate, polyoxyethylene stearyl ether phosphate ester, polyoxyethylene stearyl ether phosphate, polyoxypropylene octyl ether phosphate ester, polyoxypropylene octyl ether phosphate, polyoxypropylene decyl ether phosphate ester, polyoxypropylene decyl ether phosphate, polyoxypropylene lauryl ether phosphate ester, and polyoxypropylene lauryl ether phosphate.

Among them, alkyl phosphates, and polyoxyalkylene alkyl ether phosphate esters or salts thereof are preferrable in view of performance as a surfactant, and antistatic properties.

Alkyl phosphates herein have C4 or more, preferably have C4-22, and further preferably have C6-12 alkyl. Polyoxyalkylene alkyl ether phosphate esters or salts thereof herein have C4 or more, preferably have C6-22, and further preferably have C8-18 alkyl. As a salt, a metal salt or an amine salt is preferable, in particular, a salt of an alkali metal such as lithium, sodium, and potassium, or an alkylamine salt or an alcoholamine salt is more preferable, and a sodium salt or a monoethanolamine salt is further preferable.

Examples of nonionic surfactants herein include: ester type nonionic surfactants formed by ester-linking a polyhydric alcohol such as glycerin and a saccharide, and a fatty acid; ether type nonionic surfactants such as polyoxyethylene alkyl ether, and polyoxyethylene alkyl phenyl ether; ester-ether type nonionic surfactants formed by adding an alkylene oxide to a fatty acid or a polyhydric alcohol fatty acid ester; and amide type nonionic surfactants constituted of a hydrophobic group and a hydrophilic group via an amide bond, such as a fatty acid alkanolamide. Among them, ester type, ether type, and ester-ether type nonionic surfactants are preferable in view of heat resistance, and ether type nonionic surfactants are preferrable in view of antistatic properties.

Examples of ester type or ester-ether type nonionic surfactants herein include: glycerin fatty acid esters such as glycerol mono(di)laurate, glycerol mono(di)stearate, glycerol, glycerol mono(di)oleate, diglycerol mono(di)stearate, and triglycerol mono(di)stearate; polyoxyalkylene glycerin fatty acid esters such as polyoxyethylene glycerol mono(di)laurate, polyoxyethylene glycerol mono(di)stearate, polyoxypropylene glycerol mono(di)laurate, polyoxypropylene glycerol mono(di)stearate, polyoxybutylene glycerol mono(di)laurate, and polyoxybutylene glycerol mono(di)stearate; polyoxyalkylene fatty acid esters such as polyoxyethylene mono(di)laurate, polyoxyethylene mono(di)stearate, polyoxyethylene mono(di)oleate, polyoxypropylene mono(di)laurate, and polyoxypropylene mono(di)stearate; sorbitan fatty acid esters such as sorbitan mono(di)laurate, sorbitan mono(di)palmitate, sorbitan mono(di)stearate, and sorbitan mono(di)oleate; and polyoxyalkylene sorbitan fatty acid esters such as polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate, polyoxyethylene sorbitan trioleate, polyoxypropylene sorbitan monolaurate, and polyoxypropylene sorbitan monostearate.

Among them, in view of compatibility with polyester, and antistatic properties, glycerin fatty acid esters, polyoxyalkylene glycerin fatty acid esters, and polyoxyalkylene fatty acid esters are preferable, and glycerin fatty acid esters and polyoxyalkylene glycerin fatty acid esters which are fatty acid esters having a glycerin skeleton are more preferable.

Among them, nonionic surfactants having C8 or more, preferably having C10-22, and further preferably having C12-18 alkyl are desirable in view of excellent antistatic properties and compatibility.

Examples of ether type nonionic surfactants herein include: polyoxyalkylene alkyl ethers such as polyoxyethylene lauryl ether, polyoxyethylene isodecyl ether, polyoxyethylene cetyl ether, polyoxyethylene stearyl ether, polyoxyethylene oleyl ether, polyoxyethylene octyldodecyl ether, polyoxypropylene lauryl ether, polyoxypropylene cetyl ether, polyoxypropylene stearyl ether, polyoxypropylene oleyl ether, polyoxybutylene lauryl ether, polyoxybutylene cetyl ether, polyoxybutylene stearyl ether, and polyoxybutylene oleyl ether; and polyoxyalkylene phenyl ethers such as polyoxyethylene triphenyl phenyl ether, polyoxyethylene tribenzyl phenyl ether, and polyoxyethylene distyrene phenyl ether.

Among them, polyoxyalkylene alkyl ether is preferrable in view of antistatic properties. In view of excellent antistatic properties and compatibility, an ether type nonionic surfactant herein has C8 or more, preferably has C 10-22, and further preferably has C12-18 alkyl.

Examples of cationic surfactants herein include: quaternary ammonium salt type surfactants such as alkylammonium salts, and alkylbenzylammonium salts; and amine salt type surfactants such as N-methylbishydroxyethylamine fatty acid ester-hydrochloride. Among them, quaternary ammonium salt type surfactants are preferrable in view of excellent antistatic properties.

Examples of quaternary ammonium salt type cationic surfactants herein include alkylammonium salts such as octyltrimethylammonium salt, decyltrimethylammonium salt, lauryltrimethylammonium salt, tetradecyltrimethylammonium salt, hexadecyltrimethylammonium salt, stearyltrimethylammonium salt, octyldimethylethylammonium salt, decyldimethylethylammonium salt, lauryldimethylethylammonium salt, tetradecyldimethylethylammonium salt, hexadecyldimethylethylammonium salt, octyltriethylammonium salt, lauryltriethylammonium salt, hexadecyltriethylammonium salt, and didecyldimethylammonium salt; and alkylbenzylammonium salts such as octyldimethylbenzylammonium salt, decyldimethylbenzylammonium salt, lauryldimethylbenzylammonium salt, tetradecyldimethylbenzylammonium salt, hexadecyldimethylbenzylammonium salt, stearyldimethylbenzylammonium salt, tributylbenzylammonium salt, and trihexylbenzylammonium salt.

Among them, alkylammonium salts are preferrable in view of performance as a surfactant, and antistatic properties.

Quaternary ammonium salt type cationic surfactants herein normally have C4 or more, preferably have C 6-22, and further preferably have C8-18 alkyl at the maximum. Examples of a counter ion of the ammonium group herein include halogen ions, sulfonates, sulfates, phosphates, nitrates, and carboxylates. Among them, chlorides, sulfonates, and sulfates are preferable in view of good antistatic properties.

Examples of amphoteric surfactants herein include betaine type amphoteric surfactants such as alkyl betaine, amino acid type amphoteric surfactants such as alkylamino fatty acid salts, and amine oxide type amphoteric surfactants such as alkyl amine oxide. Among them, betaine type amphoteric surfactants are preferrable in view of excellent antistatic properties.

Examples of betaine-type amphoteric ion surfactants herein include octyl dimethylaminoacetic acid betaine, decyl dimethylaminoacetic acid betaine, lauryl dimethylaminoacetic acid betaine, tetradecyl dimethylaminoacetic acid betaine, hexadecyl dimethylaminoacetic acid betaine, stearyl dimethylaminoacetic acid betaine, octanamide propyl betaine, decanoic amidopropyl betaine, lauric acid amidopropyl betaine, tetradecanoic amidopropyl betaine, hexadecanoic amidopropyl betaine, and stearic acid amidopropyl betaine.

The mean particle diameter of the surfactant herein is preferably 1 to 50 $\mu$m. A surfactant having a mean particle diameter of 1 $\mu$m or more is difficult to scatter and is excellent in handleability. A surfactant having a mean particle diameter of 50 $\mu$m or less has good dispersibility.

Here, the mean particle diameter of the surfactant is a value measured with a particle size distribution analyzer LA-960 (from Horiba, Ltd.) (median diameter on a volume basis (D50)).

In view of handleability and dispersibility, the mean particle diameter of the surfactant is more preferably at least 3 $\mu$m, further preferably at least 5 $\mu$m; and more preferably at most 45 $\mu$m, and further preferably at most 40 $\mu$m.

The powder of the present invention may contain one surfactant alone, or two or more different surfactants having different mean particle diameters among the foregoing examples of the surfactant.

The content of the surfactant (the total content of the surfactants when two or more surfactants are contained; and the total content of the surfactant and the copolymer having a polyether structure when the aforementioned copolymer is further contained) in the powder of the present invention is not particularly limited. The lower limit of this content is preferably at least 0.1 mass%, more preferably at least 0.4 mass%, further preferably at least 0.7 mass%, and most preferably at least 1.0 mass%. The upper limit of this content is preferably at most 20 mass%, more preferably at most 17 mass%, further preferably at most 14 mass%, and particularly preferably at most 11 mass%. The content within the above range leads to good distributability and antistatic properties of the powder.

<Inorganic Fine Particle>

The powder of the present invention may contain an inorganic fine particle. In this case, the powder of the present invention preferably contains two or more inorganic fine particles having different compositions in particular in view of adjusting electric charge to suppress generation of static electricity.

Specifically, the following inorganic fine particles can be used for the powder of the present invention: particles of calcium carbonate, calcium oxide, zeolite, amorphous aluminosilicate, kaolin, clay, synthetic silica, titanium oxide, alumina, barium sulfate, aluminum sulfate, magnesium hydroxide, and so on. Among them, in view of improving the slipperiness of the powder, silica and zeolite are preferable, and silica is particularly preferable.

When the powder of the present invention contains two or more inorganic fine particles having different compositions, it is preferable to use inorganic fine particles in different states of electrification in combination in view of suppressing generation of static electricity: for example, a positively charged inorganic fine particle and a negatively charged inorganic fine particle are used in combination.

Examples of a positively charged inorganic fine particle herein include silica surface-treated with a dimethylsilyl group and an amino group, and silica surface-treated with a trimethylsilyl group and an amino group. Among them, silica surface-treated with a trimethylsilyl group and an amino group is preferrable because having improved water repellency, and thereby, highly effective in improving the slipperiness of the powder.

Examples of a negatively charged inorganic fine particle herein include silica surface-treated with a dimethylsilyl group, and silica surface-treated with a trimethylsilyl group. Among them, silica surface-treated with a trimethylsilyl group is preferrable because having improved water repellency, and thereby, highly effective in improving the slipperiness of the powder.

The mean particle diameter of the inorganic fine particle used in the invention is not particularly limited. The lower limit of this mean particle diameter is preferably at least 1 nm, more preferably at least 3 nm, further preferably at least 5 nm, and particularly preferably at least 7 nm. The upper limit of this mean particle diameter is preferably at most 50 nm, more preferably at most 40 nm, further preferably at most 30 nm, and particularly preferably at most 20 nm. This mean particle diameter within the above range leads to good distributability and antistatic properties of the powder.

The mean particle diameter of the inorganic fine particle is measured in a state where all the inorganic fine particle(s) are mixed, and is a value D50 measured with a particle size distribution evaluating machine.

The content of the inorganic fine particle (the total content when two or more inorganic fine particles are contained) in the powder of the present invention on the basis of 100 parts by weight of the PBT is not particularly limited. The lower limit of this content is preferably at least 0.05 mass%, further preferably at least 0.1 mass%, more preferably at least 0.15 mass%, and most preferably at least 0.2 mass%. The upper limit of this content is preferably at most 5.0 mass%, further preferably at most 4.0 mass%, more preferably at most 3.0 mass%, and most preferably at most 2.0 mass%. This content within the foregoing range leads to good distributability and antistatic properties of the powder.

When the powder of the present invention contains two or more inorganic fine particles having different compositions as the inorganic fine particle, particularly, when this powder contains positively and negatively charged inorganic fine particles as described above, the mass ratio of the positively charged inorganic fine particle and the negatively charged inorganic fine particle is preferably 1:0.1 to 10, and is particularly preferably 1:0.2 to 5; especially the positively charged inorganic fine particle and the negatively charged inorganic fine particle are contained in an equal amount.

The composition of the inorganic fine particle in the powder can be identified by analyzing, by EDX (energy-dispersive X-ray spectroscopy), the residue of the powder after the powder is burned in air at high temperature.

The content of the inorganic fine particle in the powder is the content of the inorganic fine particle including an organic compound in the powder when the inorganic fine particle is surface-treated with the organic compound. The content of such an inorganic fine particle can be obtained by measuring the amount of the residue of the powder after the powder is burned in air at high temperature.

<Stabilizer>

Preferably, the powder of the present invention contains a stabilizer.

Examples of the stabilizer herein include phenolic stabilizers, amine stabilizers, phosphorus stabilizers, and thioether stabilizers. Among them, in the present invention, phosphorus stabilizers and phenolic stabilizers are preferrable. More preferably, a phenolic stabilizer and a phosphorus stabilizer are used in combination.

As a phenolic stabilizer herein, a hindered phenolic stabilizer is preferrable. Examples of a hindered phenolic stabilizer herein include pentaerythritol tetrakis[3-(3,5-di-tert-butyl-4-hydroxyphenyl)propionate], octadecyl-3-(3,5-di-tert-butyl-4-hydroxyphenyl)propionate, pentaerythritol tetrakis((β-laurylthiopropionate), thiodiethylenebis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1, 1-dimethylethyl)-4-hydroxyphenyl]methyl]phosphonate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,SH)-trione, 2,6-di-tert-butyl-4-(4,6-bis(octylthio)-1,3,5-triazine-2-ylamino)phenol, 2-[1-(2-hydroxy-3,5-di-tert-pentylphenyl)ethyl]-4,6-di-tert-pentylphenyl acrylate, and 3,9-bis{2-[3-(3-tert-butyl-4-hydroxy-5-methylphenyl)propionyloxy]-1,1-dimethyl ethyl }-2,4,8, 10-tetraoxaspiro[5,5]undecane.

Among them, pentaerythritol tetrakis[3-(3,5-di-tert-butyl-4-hydroxyphenyl)propionate], octadecyl-3-(3,5-di-tert-butyl-4-hydroxyphenyl)propionate, pentaerythritol tetrakis(β-laurylthiopropionate), and 3,9-bis{2-[3-(3-tert-butyl-4-hydroxy-5-methylphenyl)propionyloxy]-1,1-dimethylethyl}-2,4,8,10-tetraoxaspiro[5,5]undecane are preferrable.

Specific examples of such a phenolic stabilizer include "Irganox 1010" (trade name, hereinafter the same is applied), and "Irganox 1076" manufactured by BASF, and "ADK STAB AO-50", "ADK STAB AO-60", "ADK STAB AO-80", and "ADK STAB AO-412S" manufactured by ADEKA Corporation.

Examples of phosphorus stabilizers herein include phosphite compounds. Examples of phosphite compounds herein include bis(2,4-dicumylphenyl)pentaerythritol diphosphite, bis(2,6-di-tert-butyl-4-methylphenyl)pentaerythritol diphosphite, and tris(2,4-di-tert-butylphenyl)phosphite.

Specific examples of such a phosphorus stabilizer include "Doverphos S-9228" manufactured by Properties & Characteristics, and "ADK STAB PEP-36" and "ADK STAB AS2112" manufactured by ADEKA Corporation.

The powder of the present invention may contain one stabilizer, or two or more stabilizers in any combination at any ratio among the foregoing examples of a stabilizer.

The content of the stabilizer in the powder of the present invention is preferably at least 0.01 parts by mass, more preferably at least 0.05 parts by mass, further preferably at least 0.08 parts by mass, and particularly preferably at least 0.1 parts by mass on the basis of 100 parts by mass of the PBT of the present invention. The upper limit of this content is preferably at most 5 parts by mass, more preferably at most 4 parts by mass, and further preferably at most 3 parts by mass. The content of the stabilizer at the foregoing lower limit or more leads to a tendency to improve thermal stability. The content of the stabilizer at the foregoing upper limit or less can lead to effective reduction of the amount of gas to be generated to lead to suppression of difficulty with additive manufacturing.

As described in the undermentioned method of producing the resin composition of the present invention, the stabilizer and the following various additives can be contained in the resin composition of the present invention by melting and kneading these stabilizer and additives with the PBT of the present invention. These stabilizer and additives may be added to the reaction system in the steps of producing the PBT of the present invention, for example, in the step of transesterification and/or an esterification reaction, or in the subsequent melt polycondensation reaction step.

<Other Components>

The resin composition of the present invention, which is a raw material for producing the powder of the present invention, may be a resin composition further containing a resin component and/or an additive other than the above-described components.

Examples of the other resin component herein include thermoplastic resins other than the PBT, such as polyester resins.

Examples of the other additive herein include crystal nucleating agents, antioxidants, color protection agents, pigments, dyes, ultraviolet absorbers, mold release agents, ready-slip agents, flame retardants, inorganic fibers, organic fibers, and organic particles.

Examples of flame retardants herein include the compounds described in JP 2015-025127 A, paragraphs [0033] to [0040], which is incorporated in this description.

<Resin Composition and Production thereof>

The method of producing the resin composition of the present invention is not particularly limited as long as the resin composition contains each of the components.

The resin composition of the present invention can be produced by mixing, and melting and kneading each of the components. For example, the resin composition of the present invention can be produced by: premixing the PBT of the present invention with the other components such as the copolymer having a polyether structure, the surfactant, the inorganic fine particle, and the stabilizer, which are incorporated if necessary, by means of any of various mixers such as a tumbler and a Henschel mixer, and thereafter melting and kneading the premix by means of a Banbury mixer, a roll, a brabender, a uniaxial kneading extruder, a biaxial kneading extruder, a kneader, or the like.

The inorganic fine particle may be mixed with the powder produced from the resin composition of the present invention to be incorporated as a powder mixture by the undermentioned method without kneading in the resin composition of the present invention.

For example, the resin composition of the present invention can be also produced by: feeding the components to an extruder by means of a feeder, and melting and kneading the fed components without each of the components premixed or after premixing of only some of the components.

Further, for example, the resin composition of the present invention can be also produced by: obtaining, as a masterbatch, a resin composition by premixing some of the components, feeding the premix to an extruder, and melting and kneading the fed premix; and again mixing this masterbatch with the remaining components, and melting and kneading the mixture.

The heating temperature for the melting and kneading can be selected, as appropriate, from the range of 220 to 300°C normally. Too high a heating temperature for the melting and kneading may promote deterioration of the resin, or may make it easy to generate cracked gas. Therefore, it is desirable to select a screw structure in view of shear heating etc. Desirably, a stabilizer and an antioxidant are used for suppressing cracking in the kneading or in fabrication in the following steps.

The melting point of the resin composition of the present invention is not particularly limited, but in view of heat resistance of a manufactured article to be obtained, the lower limit thereof is preferably at least 150°C, more preferably at least 170°C, further preferably at least 175°C, particularly preferably at least 180°C, and most preferably at least 185°C. The upper limit of this melting point is preferably at most 227°C, more preferably at most 215°C, further preferably at most 210°C, particularly preferably at most 205°C, and most preferably at most 195°C.

The content of the PBT of the present invention in the resin composition of the present invention is equal to the content of the PBT of the present invention in the powder, and is preferably at least 50 parts by mass, more preferably at least 60 parts by mass, further preferably at least 70 parts by mass, particularly preferably at least 80 parts by mass, and most preferably at least 90 parts by mass on the basis of 100 parts by mass of the resin composition. The upper limit of this content is normally 100 parts by mass. Any other components are contained as appropriate.

<Method of Producing Powder for Selective Laser Sintering>

Examples of a powderizing means for producing the powder of the present invention include: melt granulation of melting the resin composition of the present invention approximately at the melting point into a fiber, and thereafter cutting the fibrous composition; and pulverization of cutting or breaking a resin material made from the resin composition of the present invention by applying an impact or shearing to the resin material. For improving the application properties of the powder in additive manufacturing, preferably, the powder is in a roundish form, that is, has a large circularity. Thus, for obtaining a powder in such a preferred form, a preferred powder method is preferably selected for the resin composition of the present invention, preferably, the resin composition containing the copolymerized PBT of the present invention.

As a pulverizing means, for example, any of the following means can be employed: a stamp mill, a ring mill, a stone mill, a mortar, a roller mill, a jet mill, a high speed rotary mill, a hammer mill, a pin mill, a container driven mill, a disk mill, and a stirred media mill.

For the purpose of preventing the resin material from elongating due to shear heating in the pulverization, the following technique is also used: the inside of a powder system is cooled by the use of, for example, liquid nitrogen, and thereby, the temperature of the resin in the pulverization is lowered to produce the powder not by ductile fracture but by brittle fracture.

In the present invention, the use of, for the pulverization, a high speed rotary mill that allows a powder having particle size distribution and a shape suitable for additive manufacturing to be obtained leads to better fluidity, and better application properties of the powder in fabrication, which is preferrable.

Preferably, a classification step is performed after the pulverization in view of removing an elongated powder from the pulverized powder to obtain a larger circularity.

In this case, examples of a classification method herein include air classification and screen classification.

The aforementioned inorganic fine particle may be added to and mixed with the obtained powder if necessary.

<Physical Properties of Powder for Selective Laser Sintering>

(D50)

In view of applying the powder by a thickness within a predetermined range in fabrication, in the particle size distribution of the powder of the present invention, D50, the particle of which has a volume ratio of 50%, is preferably at least 20 $\mu$m, more preferably at least 30 $\mu$m, further preferably at least 40 $\mu$m, particularly preferably at least 50 $\mu$m, and most preferably at least 55 $\mu$m; and preferably at most 80 $\mu$m, more preferably at most 75 $\mu$m, and further preferably at most 70 $\mu$m.

The particle size distribution of the powder for selective laser sintering is measured by the method described in the section of examples below.

(Application Ratio (Filling Ratio))

In view of uniform fillability of the powder in fabrication, the application ratio (filling ratio) of the powder of the present invention is at least 0.6, more preferably at least 0.65, and further preferably at least 0.7. The upper limit of this application ratio (filling ratio) is normally 1.0.

The application ratio (filling ratio) of the powder is measured by the following method.

In a recess having a size of 20 mm×20 mm and a depth of 0.2 mm in a table, 1 g of the powder is put; thereafter, a roller is rolled over the table at a speed of 3 mm/sec; thereby, the powder in the recess is levelled off. From the weight and the specific gravity of the powder filling the recess, the volume of the powder filling the recess is calculated to obtain the volume ratio of the filling powder to the volume of the recess. The obtained value is defined as the application ratio (filling ratio) of the powder.

(Electrification Characteristics)

A feature of the powder of the present invention is to satisfy the following formula (1):

$$(1): |\text{voltage after a drum rotates - initial voltage}| \leq 100$$

where the initial voltage and the voltage after a drum rotates of the powder are values measured in an electrification characteristics test with a rotating drum type powder flow analyzer, in the electrification characteristics test, 50 to 150 g of the powder is weighed out to measure the values under the conditions for the rotating drum of 1 rpm for 2 minutes. Here, the unit of the voltages is V.

Before the electrification characteristics test, preferably, static electricity is eliminated from the powder by means of an ionizer for 1 to 5 minutes.

Here, the initial voltage and the voltage after the drum rotates are measured with Revolution (from Mercury Scientific Inc).

Generally, a powder is rotated in a drum of a rotating drum type powder flow analyzer to be charged with electricity by friction. When the initial voltage of the powder is negative, the absolute value of the negative voltage thereof further increases. When the initial voltage of the powder is positive, the positive voltage thereof further increases.

The formula (1) shows an indicator for such electrification characteristics. The absolute value of the difference between the voltage after the drum rotates, and the initial voltage as small as 100 V or less means suppressed electrification characteristics, difficulty with adhesion to a recoater etc. in fabrication in selective laser sintering, and excellent application properties and distributability.

In view of suppressed electrification characteristics, the value of |the voltage after the drum rotates - the initial voltage| is preferably at most 100 V, more preferably at most 50 V, further preferably at most 30 V, further preferably at most 20 V, particularly preferably at most 10 V, and most preferably at most 5 V.

(Adhesion to Recoater)

A feature of the powder of the present invention is suppressed adhesion to a recoater of a selective laser sintering machine when this powder displays the above-described electrification characteristics.

The state of the adhesion of the powder of the present invention to the surface of a recoater when the powder is applied onto a build platform of a selective laser sintering machine by distribution, and leveling off with the recoater, to perform fabrication is visually observed to evaluate the adhesion to the recoater according to the following criteria.

The evaluation is carried out at every temperature of 25°C and 150°C in a fabricating area.

(Evaluation Criteria for Adhesion to Recoater)

excellent: almost no adhesion of the powder
good: some of the powder is adhered, but the area where no powder is adhered is larger than the area where the powder is adhered
fair: the area where the powder is adhered is larger than the area where no powder is adhered poor: the powder is adhered to almost all over the surface

The powder of the present invention is preferably evaluated to be fair, good or excellent at both the temperatures; more preferably evaluated to be fair, good or excellent at both the temperatures, and good or excellent at least at one of the temperatures; further preferably evaluated to be fair, good or excellent at both the temperature, and excellent at least at one of the temperatures; particularly preferably evaluated to be good or excellent at both of the temperatures, and excellent at least at one of the temperatures; and most preferably evaluated to be excellent at both the temperatures.

[Selective Laser Sintering]

The selective laser sintering according to the present invention is a method of producing a manufactured article according to the present invention by the use of the powder of the present invention.

The selective laser sintering according to the present invention can be carried out according to a conventional method with an ordinary selective laser sintering machine.

As a selective laser sintering machine herein, for example, the following selective laser sintering machine can be used: a selective laser sintering machine having: a build stage (build platform); a thin layer formation means for forming a thin layer of a powdered material on this build stage; a heating means for heating the formed thin layer by, for example, irradiation with a laser, and thereby, fusing particles of the powdered material to form a manufactured article layer; a moving means for moving the build stage in the layering direction (vertical direction); and a control means for controlling these means and build stage to repeatedly perform formation of the thin layer, heating, and movement of the stage to layer the manufactured article layers.

For example, when laser heating is used, fabrication can be performed by means of this selective laser sintering machine through the following steps (1) to (4):

step (1) of forming a thin layer of the powdered material;
step (2) of selectively irradiating the preheated thin layer with laser light to form a manufactured article layer formed by fusing the powdered material, which may be the step of selectively spraying a melting accelerator (component that promotes melting of the resin), and a detailing agent (component that leads to the formation of the outline of the layer) over a pre-heated thin layer, and thereafter, irradiating the entire layer with an infrared lamp, a xenon lamp, or a halogen lamp to form a manufactured article layer formed by fusing the powdered material;
step (3) of lowering the build stage by the thickness of a formed manufactured article layer; and
step (4) of repeating the steps (1) to (3) in this order plural times to layer the manufactured article layers.

In step (1), a thin layer of the powdered material is formed. For example, the powdered material fed from a powder delivery part is spread evenly over the build stage by means of a recoater (a blade or a roll). The thin layer is formed directly over the build stage, or so as to be in contact with the powdered material already spread or a manufactured article layer already formed.

The thickness of the thin layer can be set conforming to the thickness of the manufactured article layer. Any thickness can be set for the thin layer according to the precision of a 3D manufactured article to be produced. Normally, the thickness of the thin layer is approximately 0.01 to 0.3 mm.

In step (2), a location at the formed thin layer where the manufactured article layer is to be formed is selectively irradiated with a laser to fuse the powdered material at the irradiated position. Thus, adjacent portions of the powdered material melt with each other to form a fused body that is the manufactured article layer. At this time, the powdered material having received the energy of the laser is fused with the layer already formed. Therefore, the adjacent layers are also adhered to each other. A portion of the powdered material which is irradiated with no laser is recovered as an excess powder, and reused as a recovered powder.

Alternatively, instead of selective irradiation with a laser, a melting accelerator (component that promotes melting of the resin), and a detailing agent (component that leads to the formation of the outline of the layer) are selectively sprayed, and thereafter, the whole is irradiated with an infrared lamp, a xenon lamp, or a halogen lamp to fuse the powdered material. As well as the case of using a laser, a portion of the powdered material which is not fused is recovered as an excess powder, and reused as a recovered powder.

In step (3), for the next step (1), the build stage is lowered by the thickness of the manufactured article layer formed in step (2).

The temperature of the fabricating area in the selective laser sintering is preferably approximately 5 to 20°C lower than the melting point of the used resin composition. The fabricating time varies according to the size of a manufactured article.

[Manufactured Article]

A manufactured article produced by the above-described selective laser sintering with the powder of the present invention is excellent in its external appearance and strength. The strength of this manufactured article can be evaluated as follows.

<Evaluation of Tensile Strength of Manufactured Article>

For example, a 1BA type tensile test specimen conforming to JIS K7161 as a test specimen for measuring tensile strength is prepared with the powder of the present invention and an SLS 3D printer (Lisa Pro (from Sinterit) under the conditions of 175°C in temperature of a build platform, and 0.125 mm in pitch.

For fabrication, a flow aid and an electromagnetic absorber may be further added to the powder of the present invention.

The tensile strength of the prepared 1BA type tensile specimen is measured conforming to ISO527 under the conditions of 23°C in test temperature, 50 mm/min in tensile strength, and 45 mm in distance between chucks.

This tensile strength is preferably at least 17 MPa, more preferably at least 18 MPa, further preferably at least 19 MPa, and particularly preferably at least 20 MPa.

[Examples]

Hereinafter the present invention will be described in more detail with examples. The present invention is not limited to the following examples unless deviating the gist thereof.

[Abbreviations for Additives]

<Stabilizer>

AO-80: 3,9-Bis{2-[3-(3-tert-butyl-4-hydroxy-5-methylphenyl)propionyloxy]-1,1-dimethylethyl}-2,4,8,10-tetraoxaspiro[5.5]undecane ("ADK STAB AO-80" manufactured by ADEKA Corporation)

PEP-36: 3,9-Bis(2,6-di-tert-butyl-4-methylphenoxy)-2,4,8,10-tetraoxa-3,9-diphosphaspiro[5.5]undecane ("ADK STAB PEP-36" manufactured by ADEKA Corporation)

<Copolymer Having Polyether Structure>

NC6321: polyether ester amide block copolymer (copolymer having a polyether structure, "PELESTAT NC6321" manufactured by Sanyo Chemical Industries, Ltd.)

<Surfactant>

PC-3: sodium alkyl sulfonate (anionic surfactant, "ELEC PC-3" manufactured by Kao Corporation, mean particle diameter: 18 μm)

<Inorganic Fine Particle>

RX-200: silica surface-treated with a trimethylsilyl group (manufactured by NIPPON AEROSIL CO., LTD., mean particle diameter: 12 nm)

RA-200H: silica surface-treated with a trimethylsilyl group and an amino group (manufactured by NIPPON AEROSIL CO., LTD., mean particle diameter: 12 nm)

Alu CRK: alumina (manufactured by NIPPON AEROSIL CO., LTD., mean particle diameter: 20 nm)

[Method for Measuring Physical Properties of PBT]

<Melting Point>

A sample pan was packed by 5 to 7 mg of a PBT powder that was weighed out from obtained powderized copolymerized PBT pellets to prepare a pan for measurement. The temperature was raised by means of a differential scanning calorimeter (Diamond DSC from PerkinElmer Inc., power compensation type) from 20°C to 250°C at 10°C/min in the rate of temperature rise. The DSC curve obtained after the first measurement in the temperature rise was analyzed, and the temperature of the endothermic peak was defined as the melting point.

[Method for Evaluating Powders Obtained in Examples and Comparative Examples]

<Particle Size Distribution>

The particle size distribution of 5 g of a powder that was weighed out from the powder obtained in each of the examples and comparative examples was measured with a particle size distribution analyzer (LA-960 from Horiba, Ltd.). In the detected particle size distribution, the particle diameter D50 at 50% of the frequency distribution of the powder was obtained.

<Electrification Characteristics Test>

By means of an ionizer, the static electricity of 100 g of a powder that was weighed out from the powder obtained from each of the examples and comparative examples was eliminated for approximately 3 minutes; thereafter, the initial voltage (V), and the voltage (V) after a drum rotated of the resultant powder were measured with a rotating drum type powder flow analyzer (product name: Revolution, from Mercury Scientific Inc.). The conditions for the rotating drum were: 1 rpm in rotation number; and 2 minutes in rotation time.

<Adhesion to Recoater>

The state of the adhesion of the obtained powder to the surface of a recoater when the powder was applied onto a build platform of a selective laser sintering machine by distribution, and leveling off with the recoater, to perform fabrication was visually observed to evaluate the adhesion to the recoater according to the following criteria.

The evaluation was carried out at every temperature of 25°C and 150°C in a fabricating area.

(Evaluation Criteria for Adhesion to Recoater)

excellent: almost no adhesion of the powder

good: some of the powder was adhered, but the area where no powder was adhered was larger than the area where the powder was adhered

fair: the area where the powder was adhered was larger than the area where no powder was adhered

poor: the powder was adhered to almost all over the surface

<Preparation of Manufactured Article>

Fabricability was evaluated by the use of the powder of each of example 2 and comparative example 1. A 1BA type tensile test specimen conforming to JIS K7161 as a test specimen for measuring tensile strength was prepared with 0.3 parts by mass of an alumina particle (Alu CRK manufactured by AEROSIL CO., LTD., mean particle diameter: 20 nm) as a flow aid, and 0.3 parts by mass of a carbon powder (Fine Powder SGP-10 manufactured by SEC CARBON, LIMITED., mean particle diameter: 10 $\mu$m) as an electromagnetic absorber in addition to 100 parts by mass of the polybutylene terephthalate powder, and an SLS 3D printer (Lisa Pro (from Sinterit) under the conditions of 175°C in temperature of a build platform, and 0.125 mm in pitch. As a test specimen for evaluating an external appearance, a manufactured article having a thickness of 1 mm was also prepared.

<Measurement of Tensile Strength of Manufactured Article>

The tensile strength of the prepared 1BA type tensile specimen was measured conforming to ISO527 under the conditions of 23°C in test temperature, 50 mm/min in tensile strength, and 45 mm in distance between chucks.

<Evaluation of External Appearance of Manufactured Article>

The prepared manufactured article having a thickness of 1 mm was visually observed to confirm whether there was failure with fabrication (whether there was any place where the manufactured article was not formed but a void of at least 1 mm was formed) on the surface of the manufactured article. The confirmation results were evaluated according to the following criteria.

good: no failure with fabrication
poor: failure with fabrication at at least one place

[Example 1]

To an ester reaction tank comprising a stirrer, a nitrogen inlet, a heating machine, a thermometer, and a distillation tube, 705.5 parts by mass of dimethyl terephthalate, 151.0 parts by mass of isophthalic acid (IPA), 613.8 parts by mass of 1,4-butanediol, and tetrabutyl titanate as a catalyst (33 mass ppm in terms of a titanium element on the basis of the polymer to be generated) were added.
Next, the liquid temperature was raised from 150°C to 210°C for 90 minutes while stirring, and the raised temperature was kept at 210°C for 90 minutes. During this, transesterification and an esterification reaction were carried out for 180 minutes in total while distilling out generated methanol and water.
On the basis of the polymer to be generated, 48 mass ppm of magnesium acetate tetrahydrate in terms of metal magnesium was added 15 minutes before the completion of the transesterification and the esterification reaction, and further, a phenolic stabilizer ("Irganox 1010" manufactured by BASF) (0.15 mass% based on the polymer to be generated) was added to the resultant, followed by addition of tetrabutyl titanate (61 mass ppm in terms of a titanium element on the basis of the polymer to be generated).
This reaction product was transferred to a polycondensation reaction tank comprising a stirrer, a nitrogen inlet, a heating machine, a thermometer, a distillation tube, and a decompression outlet to perform a melt polycondensation reaction at reduced pressure.
In the melt polycondensation reaction, the pressure in the tank was gradually reduced from atmospheric pressure to 0.13 KPa for 85 minutes, and the reaction was continued at 0.13 KPa. The reaction temperature was kept at 210°C for 15 minutes since the start of the decompression, and thereafter, was raised to 235°C for 45 minutes, and the raised temperature was kept. The reaction was ended at the time point when a predetermined stirring torque was reached. The time required for the melt polycondensation reaction was 170 minutes.
After this melt polycondensation reaction, the pressure inside the tank was returned with nitrogen from a reduced pressure state, and next, the inside of the tank is pressurized to draw the polymer. The polymer was extruded in a strand form from a mouthpiece, the strand was cooled in a cooling water tank, and thereafter, the cooled strand was cut with a strand cutter to be pelletized as copolymerized PBT pellets.
Next, 0.5 mass% of ADK STAB AO-80 (manufactured by ADEKA Corporation), and 1.0 mass% of ADK STAB PEP-36 (manufactured by ADEKA Corporation) were added to the copolymerized PBT pellets, and 10 parts by mass of PELESTAT NC6321 (manufactured by Sanyo Chemical Industries, Ltd.) as the copolymer having a polyether structure was added to 90 parts by mass of this copolymerized PBT pellets to be made a compound.
Further, this compound product was subjected to high speed rotary pulverization to be powderized.
The powder obtained in such a way was subjected to the melting point measurement, particle size distribution measurement, electrification characteristics test, and measurement of the amount of the adhesion to a recoater. The results are shown in table 1.

[Example 2]

A powder was obtained in the same manner as in example 1 except that 1.5 parts by mass of ELEC PC-3 (manufactured by Kao Corporation) as a surfactant was added to 98.5 parts by mass of the copolymerized PBT pellets, instead of the copolymer having a polyether structure in example 1. The obtained powder was subjected to the same measurements and evaluations as in example 1. The results are shown in table 1.

[Example 3]

To the copolymerized PBT pellets obtained by the same operations as in example 1, 0.5 mass% of ADK STAB AO-80 (manufactured by ADEKA Corporation), and 1.0 mass% of ADK STAB PEP-36 (manufactured by ADEKA Corporation) were added to be made a compound.

Further, this compound product was subjected to high speed rotary pulverization to be powderized. Further, 0.15 parts by mass of RX-200 (from NIPPON AEROSIL CO., LTD.), and 0.15 parts by mass of RA-200H (from NIPPON AEROSIL CO., LTD.) were added to 100 parts by mass of this powderized compound, and the resultant was adhered to the copolymerized PBT pellets. The obtained powder was subjected to the electrification characteristics test, and the measurement of the amount of the adhesion to a recoater. The results are shown in table 1. At this time, the data on the copolymerized PBT pellets was used for the melting point measurement, and the data on the powderized PBT pellets was used for the particle size distribution measurement.

[Comparative Examples 1 to 3]

The powders were obtained in the same manner as in Example 1 except that the additives and the amounts in example 1 were changed as shown in table 1 (it is noted that the copolymerized PBT alone was contained in comparative example 1). These powders were subjected to the same measurements and evaluations as in example 1. The results are shown in table 1.

## Table 1

(Table 1)

| | | | Details | Example | | | Comparative Example | | |
|---|---|---|---|---|---|---|---|---|---|
| | | | | 1 | 2 | 3 | 1 | 2 | 3 |
| Incorporation in powder (parts by mass) | Copolymerized PBT | | IPA20%PBT | 90 | 98.5 | 100[*1] | 100[*1] | 100[*1] | 100[*1] |
| | Stabilizer | | ADK STAB AO-80 | 0.5 | 0.5 | | | | |
| | (mass% on the basis of PBT) | | ADK STAB PEP-36 | 1 | 1 | | | | |
| | Copolymer having polyether structure | NC6321 | Polyether ester amide block copolymer | 10 | | | | | |
| | Surfactant | PC-3 | Sodium alkylsulfonate | | 1.5 | | | | |
| | Inorganic fine particle | RX-200 | Trimethylsilylated silica | | | | 0.15 | 0.3 | |
| | | RA-200H | Aminoalkylsilylated silica | | | | 0.15 | | |
| | | Alu CRK | Alimina | | | | | | 0.3 |
| Results of measurements and evaluations | Melting point | | °C | 192.6 | 192.4 | 192.5 | 192.5 | 192.5 | 192.5 |
| | D50 | | μm | 63.5 | 65.7 | 48.8 | 48.8 | 48.8 | 48.8 |
| | Initial voltage | | V | -67.9 | -47.8 | -4.2 | -42.5 | -52.7 | -63.0 |
| | Voltage after a drum rotates | | V | -85 | -47.4 | -2.8 | -253.5 | -203.9 | -247.9 |
| | \|voltage after a drum rotates - initial voltage\| | | | 17.1 | 0.4 | 1.5 | 211.0 | 151.2 | 184.9 |
| | Amount of adhesion to recoater at 25°C | | - | excellent | excellent | good | bad | bad | bad |
| | Amount of adhesion to recoater at 150°C | | - | excellent | excellent | fair | bad | bad | bad |
| | Tensile strength of manufactured article | | Mpa | | 20 | | 16 | | |
| | External appearance of manufactured article | | - | | good | | bad | | |

*1: parts by mass of the compound containing 0.5 mass% of AO-80, and 1 mass% of PEP-36 on the basis of the PBT

As is apparent from the above results, it is found that the powder for selective laser sintering satisfying the formula (1) can lead to suppression of static electricity to reduce the amount of the powder adhered to a recoater in fabrication, which can lead to excellent physical properties such as the application properties of the powder, and an external appearance and the strength of the manufactured article to be obtained.

**Claims**

1.  A powder for selective laser sintering, the powder comprising:

    polybutylene terephthalate, wherein
    the powder satisfies the following formula (1):

    $$(1): |\text{voltage after a drum rotates - initial voltage}| \leq 100$$

    where the initial voltage and the voltage after a drum rotates of the powder are values measured in an electrification characteristics test with a rotating drum type powder flow analyzer, in the electrification characteristics test, 50 to 150 g of the powder is weighed out to measure the values under conditions for the rotating drum of 1 rpm for 2 minutes, wherein
    a unit of the voltages is V.

2.  The powder according to claim 1, wherein
    the polybutylene terephthalate has a melting point of 170°C to 215°C.

3.  The powder according to claim 1 or 2, the polybutylene terephthalate comprising:

    a constitutional unit derived from a terephthalic acid component;
    a constitutional unit derived from 1,4-butanediol; and
    another constitutional unit.

4.  A powder for selective laser sintering, the powder comprising:

    a thermoplastic resin having a melting point of 170°C to 215°C, wherein
    the powder satisfies the following formula (1):

    $$(1): |\text{voltage after a drum rotates - initial voltage}| \leq 100$$

    where the initial voltage and the voltage after a drum rotates of the powder are values measured in an electrification characteristics test with a rotating drum type powder flow analyzer, in the electrification characteristics test, 50 to 150 g of the powder is weighed out to measure the values under conditions for the rotating drum of 1 rpm for 2 minutes, wherein
    a unit of the voltages is V.

5.  The powder according to any one of claims 1 to 4, the powder further comprising:
    at least one selected from the group consisting of a copolymer having a polyether structure, and a surfactant.

6.  The powder according to claim 5, wherein
    a content of said at least one selected from the group consisting of a copolymer having a polyether structure, and a surfactant is 0.1 mass% to 20 mass%.

7.  The powder according to any one of claims 1 to 6, the powder further comprising:
    an inorganic fine particle.

8.  The powder according to claim 7, the powder comprising
    at least two inorganic fine particles having different compositions as the inorganic fine particle.

9. The powder according to claim 7 or 8, wherein
   a content of the inorganic fine particle is 0.05 mass% to 5.0 mass%.

10. The powder according to any one of claims 7 to 9, wherein
    the inorganic fine particle has a mean particle diameter of 1 nm to 50 nm.

11. The powder according to any one of claims 1 to 10, wherein
    D50 as particle size distribution is 20 $\mu$m to 80 $\mu$m.

12. Selective laser sintering with the powder according to any one of claims 1 to 11.

13. A manufactured article with the powder according to any one of claims 1 to 11.

# INTERNATIONAL SEARCH REPORT

| International application No. |
| --- |
| PCT/JP2021/025513 |

**A. CLASSIFICATION OF SUBJECT MATTER**
B33Y 10/00(2015.01)i; B33Y 80/00(2015.01)i; B29C 64/153(2017.01)i; B29C 64/165(2017.01)i; B33Y 70/10(2020.01)i
FI: B29C64/153; B33Y70/10; B33Y10/00; B33Y80/00; B29C64/165

According to International Patent Classification (IPC) or to both national classification and IPC

**B. FIELDS SEARCHED**

Minimum documentation searched (classification system followed by classification symbols)
B33Y10/00; B33Y80/00; B29C64/153; B29C64/165; B33Y70/10

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2020-84153 A (MITSUBISHI CHEMICAL CORPORATION) 04 June 2020 (2020-06-04) paragraphs [0042]-[0043] | 1-13 |
| Y | JP 48-15458 B1 (TORAY INDUSTRIES, INC.) 15 May 1973 (1973-05-15) claim 1, line 36 to column 2, line 5 | 1-13 |

☐ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 September 2021 (13.09.2021) | 21 September 2021 (21.09.2021) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| | | International application No. |
|---|---|---|
| | | PCT/JP2021/025513 |

| Patent Documents referred in the Report | Publication Date | Patent Family | Publication Date |
|---|---|---|---|
| JP 2020-84153 A | 04 Jun. 2020 | (Family: none) | |
| JP 48-15458 B1 | 15 May 1973 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016121013 A1

- JP 2015025127 A